(19) Europäisches Patentamt

European Patent Office

Office européen des brevets

(11) **EP 3 206 319 B1**

(12) # EUROPEAN PATENT SPECIFICATION

(45) Date of publication and mention
of the grant of the patent:
**29.08.2018 Bulletin 2018/35**

(51) Int Cl.:
*H04L 1/00* (2006.01)    *H03M 13/00* (2006.01)
*H04J 13/00* (2011.01)

(21) Application number: **16305164.2**

(22) Date of filing: **12.02.2016**

(54) **NON-ORTHOGONAL DOWNLINK SIGNALS FOR MULTIPLE USERS**

NICHTORTHOGONALE DOWNLINK-SIGNALE FÜR MEHRERE BENUTZER

SIGNAUX DE LIAISON DESCENDANTE NON ORTHOGONALE POUR DE MULTIPLES UTILISATEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.08.2017 Bulletin 2017/33**

(73) Proprietor: **Alcatel Lucent**
**91620 Nozay (FR)**

(72) Inventors:
• **FANG, Dong**
**15 Dublin (IE)**
• **CLAUSSEN, Holger**
**15 Dublin (IE)**

(74) Representative: **Sarup, David Alexander**
**Alcatel-Lucent Telecom Ltd**
**Intellectual Property Business Group**
**Christchurch Way**
**Greenwich**
**London SE1O 0AG (GB)**

(56) References cited:
**US-A1- 2012 134 449**

• **NATARAJAN LAKSHMI ET AL: "Lattice Index Coding", IEEE TRANSACTIONS ON INFORMATION THEORY, IEEE PRESS, USA, vol. 61, no. 12, 1 December 2015 (2015-12-01), pages 6505-6525, XP011590106, ISSN: 0018-9448, DOI: 10.1109/TIT.2015.2491924 [retrieved on 2015-11-18]**
• **YU-CHIH HUANG ET AL: "Multistage Compute-and-Forward with Multilevel Lattice Codes Based on Product Constructions", ARXIV.ORG, CORNELL UNIVERSITY LIBRARY, 201 OLIN LIBRARY CORNELL UNIVERSITY ITHACA, NY 14853, 10 January 2014 (2014-01-10), XP080001268,**
• **FORNEY G D ET AL: "SPHERE-BOUND-ACHIEVING COSET CODES AND MULTILEVEL COSET CODES", IEEE TRANSACTIONS ON INFORMATION THEORY, IEEE PRESS, USA, vol. 46, no. 3, 1 May 2000 (2000-05-01), pages 820-850, XP008036453, ISSN: 0018-9448, DOI: 10.1109/18.841165**
• **HUANG YU-CHIH ET AL: "On decoding algorithms for construction [pi]A Lattices", 2015 22ND INTERNATIONAL CONFERENCE ON TELECOMMUNICATIONS (ICT), IEEE, 27 April 2015 (2015-04-27), pages 260-264, XP032785756, DOI: 10.1109/ICT.2015.7124693 [retrieved on 2015-06-16]**

**Description**

<u>FIELD OF THE INVENTION</u>

The field of the invention relates to the transmission of downlink signals to multiple users.

<u>BACKGROUND</u>

The 3GPP standardization effort for fifth generation (5G) networks for mobile communication targets unprecedented capacity densities of up to 25 Gbit/s/km$^2$. To this end, new multiple access technique must be developed because current 3G-4G solutions have not been designed to meet such demands.

Currently multiple signals from multiple users are transmitted using orthogonal multiple access (OMA) schemes such as frequency division multiple access (FDMA), time division multiple access (TDMA), code division multiple access (CDMA), and the orthogonal frequency division multiple access (OFDMA). These provided reasonable system-level throughput performance in packet-domain services with simple single-user detection.

However, in order to keep the orthogonality among users, OMA sacrifices the spectral efficiency. To this end, to improve the spectral efficiency and meet the capacity requirement of future 5G system, the 3GPP recently initiated discussions on further evolution of LTE where the NTT DoCoMo first proposed the framework of the non-orthogonal multiple access (NOMA).

In NOMA, multiple users are multiplexed in the power-domain at the transmitter side and multi-user signal separation on the receiver side is conducted based on successive interference cancellation (SIC). Thus, users in one cell are served by a base station (BS) with the same time/code/frequency channel, and their signals are multiplexed by using different power allocation coefficients. The novelty of NOMA comes from the fact that users with poorer channel conditions are allocated more transmission power. In this way, these users are able to decode their own messages by treating others' information as noise, since the power level of their own messages is higher. On the other hand, the users with better channel conditions will use the successive interference cancellation (SIC) strategy, i.e., they first decode the messages to the users with poorer channel conditions and then decode their own by removing the other users' information.

However, current NOMA schemes have not specified which coding scheme should be used, furthermore, if conventional SIC decoding is adopted in NOMA, the performance would be degraded significantly due to the severe error propagation among different coding layers, especially when the number of users is large.

NATARAJAN Lakshmi et al: "Lattice Index Coding", IEEE Transaction on Information theory, vol. 61, No. 12, December 2015 discloses the transmission of k messages across a broadcast channel, where a set of receivers each demands a subset of the messages from the source. Noisy index coding for broadcasting common messages is considered, wherein lattice index codes are constructed for each of the messages and are weighted by respective weighting coefficients and combined to form a signal. The receivers demand a subset of the k messages while having a prior knowledge of a different subset as side information. In one example, the weighting coefficients for different messages are formed by multiplication of primes, each weighting coefficient excluding a different prime. YU-CHIH HUANG ET AL: "Multistage Compute-and-Forward with Multilevel Lattice Codes Based on Product Constructions" discloses a two-way relay transmission scheme. User information is sent to a network node and forwarded to a central destination. Lattice codes of the signals are formed at the network node and an integer linear combination of the received signals are forwarded. The user decodes other users' information based on the received linear combination and its own information.

The present invention seeks to address at least some of the drawbacks of the currently proposed NOMA system,

<u>SUMMARY</u>

A first aspect of the present invention provides a method performed at a network node comprising receiving an indication of channel conditions from each of a plurality of user equipment; encoding a plurality of signals destined for a plurality of user equipment using a plurality of finite field linear encoders to form a plurality of lattice code signals; weighting each of said plurality of lattice codes by multiplying said lattice code signals by respective weighting coefficients, each weighting coefficient being formed from a product of distinct primes, each weighting coefficient being formed by excluding a different one of said distinct primes from said product, said weighting coefficients being selected in dependence upon said detected channel conditions, signals to be transmitted to said user equipment with poorer channel conditions being multiplied by higher value weighting coefficients; and combining said plurality of weighted lattice code signals to form a signal having a lattice code construction and outputting said signal.

The inventor of the present invention recognised that where linearly encoded signals forming lattice codewords are multiplied by coefficients which are formed as a product of a set of distinct primes excluding a prime specific to that encoder then they can be combined to form a lattice superposition codeword, which has the property due to each code layer excluding a different distinct prime and the use of the lattice code construction, of allowing the extraction of individual user equipment signals using the modulo lattice operation. This allows the individual elements of a superimposed signal to be extracted in a simple and effective manner.

In some embodiments, said encoding step comprises encoding said plurality of signals to form linear encoded signals and mapping said plurality of linear encoded signal to form said plurality of lattice code signals.

It should be noted that when the distinct primes are simple integers then the encoding step generates lattice codes, while where they are Gaussian or Eisenstein integers then in order to output lattice codes the encoding step includes a mapping step that maps linear encoded signals to lattice code signals to generate the lattice codes.

The weighting coefficients are selected in dependence upon the channel conditions for the signal. This allows poorer channel conditions to be mitigated by providing higher value coefficient for these channels. This provides a type of power allocation that aids in the signal extraction and boosts poorer signals.

In some embodiments, the mapping step comprises mapping the linear codewords generated by the linear encoders over a finite field from the finite fields to isomorphic lattice partitions.

In some embodiments, the method performed at the network node comprises: encoding a plurality of signals destined for a plurality of user equipment using a plurality of linear encoders each configured to generate codewords over finite fields where each codeword (for each user) corresponds to a distinct prime which is determined by the size of finite field (either the distinct prime is equal to the size of the finite field or the absolute value of the square of this distinct prime equals the size of the finite field); mapping the encoded signals to form lattice codes and weighting each of said plurality of mapped signals by multiplying said mapped signals by respective weighting coefficients; forming the each weighting coefficient for each codeword as a product of the distinct primes excluding the prime of that codeword; and combining said plurality of weighted mapped signals to form a signal having a lattice code construction and outputting said signal. That is each weighting coefficient is formed from a plurality of distinct primes, each weighting coefficient not comprising a different one of said plurality of distinct primes. In the above where the distinct primes are simple integers rather than Gaussian or Eisenstein integers then the encoding and mapping step are performed as a single encoding step in that the encoding generates a lattice code, so that any mapping is simply mapping the integer elements into itself

In some embodiments, codewords generated by each encoder correspond to a distinct prime which is determined by the size of the finite field. In this regard either the distinct prime is equal to the size of the finite field or the absolute value of the square of this distinct prime equals the size of finite field, depending on whether integer lattice, Gaussian integer lattice or Eisenstein integer lattice is selected. In effect weighting coefficients for each code layer are formed as a product of distinct primes excluding the prime of that code layer.

The linear encoders are channel encoders and can be formed in a number of ways, for example they may be, FEC (forward error correction coded) encoders such as turbo encoders.

The network node is a node via which the user equipment may communicate with a network, it may for example be a base station, an access point or a hub base station.

In some embodiments, each of said plurality of encoders comprises a channel encoder over a finite field, each encoder generating linear codes over the different finite fields, a size of said finite fields and said coefficients being linked, such that signals encoded by channel encoders over smaller finite fields are subsequently multiplied by higher value coefficients.

The use of encoders and in some cases single mappers which generate lattice codewords from linear codes over different Galois or finite fields which lattice codewords are then weighted with suitable coefficients before combining provides a multi-dimensional lattice constellation where the lattice's construction forms the superposition coding paradigm. The resultant superposition codeword is represented by the sum of weighted lattice codes. The weighted coefficients are constructed from the distinct primes from some special algebraic structure e.g. Gaussian or Eisenstein integers or they may be simple integers, in each case the weighting coefficient of each lattice code is formed as a product of the distinct primes excluding the prime of that codeword. The use of weighting coefficients formed in this way enables these signals to be extracted from a combined signal using modulo lattice operations.

The size of the finite field provides the lattice partition operation, which can determine a distinct prime for each codeword (either the distinct prime and the size of finite field are equal or the absolute value of the square of this distinct prime equals the size of finite field) and in turn this may be used to construct the weighting coefficient for each code layer which is formed as a product of the distinct primes excluding the prime of that code layer. Furthermore, the combination of higher weighting coefficients with lower sized finite fields for poorer channels, means that less information is transmitted by the lower value finite field which is appropriate for a poorer channel, but also that the poor reception of the poorer channel is mitigated for by the higher value weighting coefficient.

In effect in some embodiments, the signals to each UE are linearly encoded into different code layers where each code layer corresponds to a distinct prime (determined by the size of finite field) and is mapped from the finite field to form a lattice code where required and is weighted by a coefficient, which is formed as a product of the distinct primes excluding the prime of that code layer, allowing each UE to extract their desired signal by using a modulo lattice operation. In some cases this can be used in conjunction with successive interference cancellation (MLO-SIC). This allows error propagation between the layers to be avoided or at least reduced although it does increase latency. In this regard, the lattice based superposition coding has the structural property such that the interference can be exploited.

In some embodiments, said method further comprises transmitting to each of said user equipment an indication identifying at least one of an order of a finite field of said encoder and said coefficient applied to said signal for said user equipment.

An indication of the order of the finite field and/or weighting coefficient applied to the signal allows a user equipment to select the appropriate modulo lattice operation required for extraction of its signal. Furthermore, information on the finite field used in the encoder, enables the decoder to decode the extracted signals. Where the coefficients and finite field values are linked then a simple index may indicate both.

A second aspect of the present invention provides a network node comprising: a plurality of finite field linear encoders arranged in parallel, for encoding a plurality of signals destined for a plurality of user equipment to form lattice code signals; a coefficient generator for generating a plurality of weighting coefficients for each lattice code, each weighting coefficient formed as a product of a plurality of distinct primes, each weighting coefficient excluding a different one of said distinct primes from said product; a receiver for receiving an indication of channel conditions from each of said plurality of user; a plurality of multipliers for weighting each of said plurality of lattice code signals by multiplying said lattice code signals by respective ones of said generated weighting coefficients; a controller for selecting said weighting coefficients in dependence upon said detected channel conditions, encoded signals to be transmitted to said user equipment with poorer channel conditions being multiplied by higher value coefficients; a combiner for combining said plurality of weighted lattice code signals to form a signal having a lattice code construction; and a transmitter for transmitting said signal.

In some embodiments the plurality of encoders includes a plurality of signal mappers for mapping the encoded signal to form a plurality of lattice codes, while in others the encoders generate lattice codes themselves. In this regard the signal mappers and encoders may be formed as a single unit or as two separate units in series with each other.

In some embodiments, each of said plurality of encoders comprise a channel encoder over finite fields, each encoder being configured to generate linear codes over different finite fields with different sizes, said coefficient generator being configured to transmit higher value weighting coefficients to multipliers multiplying lattice code signals stemming from finite field encoders encoding over smaller finite fields.

In some embodiments, the network node further comprises a transmitter for transmitting to each of said user equipment an indication identifying a finite field of said encoder and said weighting coefficient applied to said signal for said user equipment.

A related technique provides a method performed at a user equipment comprising: receiving a signal having a lattice code construction, said signal comprising a plurality of superimposed weighted lattice code signals, each weighting coefficient being formed as a product of distinct primes, each weighting coefficient excluding a different distinct prime; extracting at least one of said lattice code signals by performing a modulo lattice operation on said signal; and decoding said at least one extracted signal.

It was recognised that by combining lattice code signals weighted by weighting coefficients to form a superposition lattice code, the individual signals could be extracted using modulo lattice operations. This is an operation with a relatively low complexity which allows signals which are not orthogonal to each other to be extracted while reducing interference effects between signals.

In some cases the method further comprises: performing successive extracting and decoding operations by: reconstructing at least one weighted lattice code signal provided by said at least one extracted decoded signal; subtracting said at least one reconstructed signal from said received signal to form a resultant signal; performing at least one modulo lattice operation on said resultant signal to extract at least one further lattice code signal; and decoding said at least one extracted signal.

Some sort of successive interference cancellation can be used to successively decode user equipment signals and remove or at least reduce the interference provided to the total signal from that signal. This may involve extracting one signal, decoding it which allows removal of at least some errors and then reconstituting it as a weighted lattice code signal and subtracting this from the received signal and in some cases repeating this multiple times until the signal that is being transmitted to the user equipment performing the operations is retrieved. In this regard the most efficient way of removing the noise and reducing interference between channels is to extract the signal with the highest weighting coefficient first, that is the signal with the poorest channel successively followed by the signals with the next highest coefficients. However, the method is not limited to this.

In other cases rather than performing the operations one after the other, a hybrid parallel and series type of extraction may be performed where several signals are extracted and decoded in parallel and these are subtracted from the original signal to provide a resultant signal on which further extraction and decoding operations may be performed. This reduces the latency in the process.

In some cases where reduced latency is of high importance and signal quality less so, the user equipment may choose to extract its own signal by performing the appropriate modulo lattice operation on the total signal. This can have interference implications particularly where the user equipment is a stronger channel user equipment with a lower coefficient. However, where for example the signal received is a streamed video for example, then latency reduction may be more important than quality improvement.

In some cases, said method further comprises: receiving an indicator from a network node identifying at least one of an encoder and weighting coefficient applied to a lattice code signal destined for said user equipment; determining from said indicator a modulo lattice operation for retrieving said lattice code signal destined for said user equipment.

The modulo lattice operation required for retrieving the lattice code signal of a user equipment may be indicated to the user equipment by indicating the encoder and/or coefficient. This information may simply be an index indicating the ranking of the channel quality of that user equipment compared to other user equipment, the channel quality determining the encoding and weighting coefficient used. Where decoding is by successive interference cancellation with the signals from user equipment being extracted in an order of increasing channel quality then the number of iterations required before the signal for this user equipment is extracted can also be determined from the indicator.

In some cases, said method comprises: determining at least one of a desired quality and latency of a received signal; in dependence upon said determined at least one of desired quality and latency, determining whether to extract said signal by performing one modulo lattice and decoding operation or by performing multiple modulo lattice, decoding and at least one signal reconstruction operation, at least some of said operations being performed in series.

As noted previously quality can be improved by using some sort of successive extracting and decoding, which allows for interference cancellation or at least reduction. However, this increases the latency of the procedure and in some circumstances reduced latency is very important. Thus, in such cases it may be advantageous to allow for some control at the user equipment which determines what properties are required from the signal and determines from these whether the signal should be extracted using multiple modulo lattice, decoding and signal reconstruction operations or whether a single operation should be used. Furthermore, it may determine whether at least some of the multiple extraction and decoding operations should be performed in parallel or whether they should all be in series. The determination of the properties of the signal may be made by detection of the type of signal, the source of the signal or an indication by the user.

A further related technique provides, user equipment comprising: a receiver for receiving a signal having a lattice code construction, said signal comprising a plurality of superimposed weighted lattice code signals, each weighting coefficient for each code layer being formed as a product of a plurality of distinct primes excluding a prime of that code layer; signal extraction circuitry configured to perform a modulo lattice operation on said received signal to extract one of said lattice code signals; and a decoder to decode said extracted signal.

In some cases the user equipment further comprises a plurality of signal extraction circuitry and a plurality of decoders for decoding signals extracted by said signal extraction circuitry, at least one lattice code signal reconstruction circuitry for reconstructing a weighted lattice code signal from at least one decoded signal and at least one signal subtraction circuitry for subtracting said reconstructed weighted lattice code signal from an input signal to at least one subsequent signal extraction circuitry.

It should be noted that some decoding includes an inverse mapping from a lattice to a linear code.

Although user equipment may simply have a single signal extraction circuitry operable to extract a signal destined for that user equipment, in many embodiments it will have several allowing for signals destined to different user equipment to be extracted and decoded, allowing error correction to occur on these signals and some degree of interference cancellation to be performed.

In some cases, said user equipment further comprises control circuitry for selectively interconnecting said plurality of signal extraction circuitry, said plurality of decoders and said at least one reconstruction circuitry in dependence on at least one of a desired quality and latency indicator.

The user equipment may comprises control circuitry which may selectively interconnect the circuitry and route signals to a selected one or more of them in dependence upon a desired quality and/or latency. As noted previously successive extraction and decoding can reduce interference but does increase latency, so in some cases control circuitry may be used to vary the amount of series and parallel operations that are performed.

In some cases, where said signal extraction circuitry are arranged in series, upstream signal extraction circuitry are operable to extract signals having larger weighting coefficients than downstream signal extraction circuitry.

In some cases, where at least two of said plurality of decoders are arranged in series said user equipment further comprises: at least one lattice code signal reconstruction circuitry for reconstructing a weighted lattice code signal from a signal output from an upstream one of said at least two signal extraction circuitry arranged in series;

A third aspect of the present invention provides a computer program which when executed by a computer is operable to control said computer to perform a method according to a first aspect of the present invention.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates the user through put of the proposed lattice partition multiple access (LPMA) technique compared to conventional techniques;
Figure 2 illustrates the proposed LPMA with MLO-SIC decoding;
Figure 3 illustrates the proposed LPMA with MLO-PIC decoding;
Figure 4 illustrates the proposed LPMA with hybrid decoding;
Figure 5 illustrates superposition mapping function for generating the superimposed lattice code at the base station;
Figure 6 illustrates MLO-SIC decoding at a UE;
Figure 7 illustrates MLO-PIC decoding;
Figure 8 illustrates hybrid decoding;
Figure 9 provides a flow diagram indicating steps of a method performed at a base station;
Figure 10 provides a flow diagram indicating steps of a method performed at a user equipment; and
Figure 11 schematically shows a user equipment .

DESCRIPTION OF THE EMBODIMENTS

Before discussing the embodiments in any more detail, first an overview will be provided.
Embodiments seek to provide a new NOMA based on the lattice superposition coding, referred to as the lattice partition multiple access (LPMA) for wireless communication and in particular, for future 5G multiple access, which exploits the structural property of the lattice codes to cancel out or at least reduce co-channel interference among users. The proposed LPMA enhances the performance over the current NOMA scheme
This lattice superposition coding based NOMA (LPMA), addresses the main issues of existing solutions by:

providing a downlink multiple access, which is robust to mobility, channel aging and incurs low overhead of CSI acquisition; and
providing a new SIC decoding method, which has a superior performance over the conventional SIC decoding when applied in NOMA.

In particular, it is proposed to use the lattice codes based superposition coding (SC) as the new multiple access design in the downlink, i.e. BS transmits a superposition of several lattice codewords for multiple users, which is a novel coding implementation for NOMA;
The linear encoders which are FEC encoders such as turbo encoders, generate codewords over a finite field. Each codeword is a vector of a certain size the elements of the vector coming from a value site which is determined from the size of the finite field. The value set may be a set of integers, Gaussian integers or Eisenstien integers. The size of this finite field provides the lattice partition operation and determines the distinct prime for each codeword which in turn can be used to determine the weighting coefficientwhich is formed as a product of the distinct primes excluding the prime of that encoder .
The corresponding benefits of the above technique can be summarized as follows: the lattice based SC has the structural property such that the interference can be exploited;

- the proposed encoding method results in a straightforward power allocation

- the proposed encoding method results in a straightforward power allocation scheme for each user's signal in SC and makes the UE extract their desired signal easily;

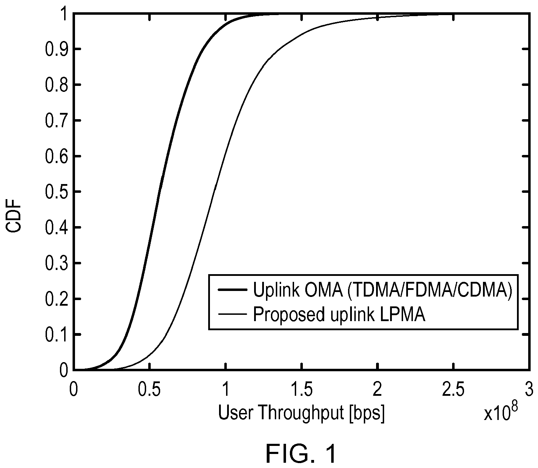

- the proposed decoding method has a linear decoding complexity and enhances the performance over the conventional SIC for SC. Compared with the existing NOMA proposed by NTT DoCoMo [1], our proposed LPMA enhances the user throughput from 70Mbps to 90Mbps. Compared with the current OMA (OFMDA), the proposed our proposed LPMA enhances the user throughput from 55Mbps to 90Mbps. These results can be seen in Fig. 1.

Fig. 1 shows the comparison of user throughput among the proposed LPMA, the conventional NOMA and OMA (OFMDA). The simulation parameters are given in the following table:

Table 1: The parameters of simulation in Fig. 1

| Cellular Layout: | Hexagonal, wrapped around |
|---|---|
| Topology | 7 sites (no sectorization) |
| Bandwidth | 10Mhz |
| Tx/Rx Antenna No. | 1 (omni-directional) |
| No. of UE per cell | 2 (under the same recourses) |
| BS-to-BS distance | 500m |
| Channels | i.i.d Rayleigh fading |
| UE Tx power | 23dBm |
| Thermal noise density | -174dBm/Hz |
| Rx Noise figure | 5dB |
| Path loss model | $21.5 + 36.7*\log10(D)$, $D$ in km |

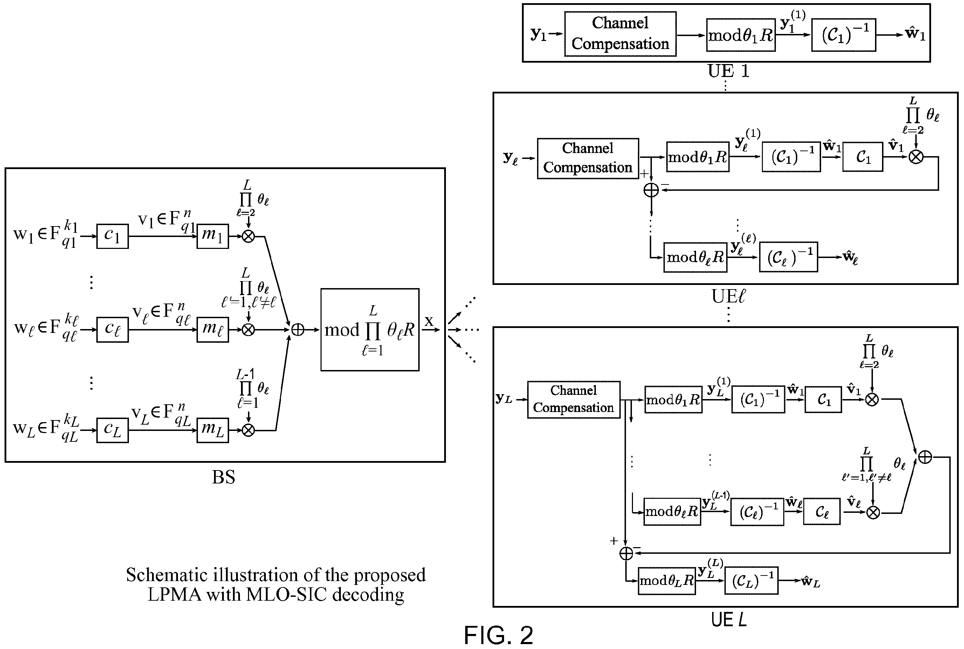

The concepts are described in more detail below. First, we introduce the following notation for easy reading of Figs. 2, 3 and 4.

Table 2: Notations of Figs.2, 3 and 4

| Notations | Physical Meanings |
|---|---|
| $\mathbf{w}_\ell$ | UE $\ell$'s desired signal |
| $C_\ell$ | The FEC encoder for UE $\ell$ |
| $\mathbf{v}_\ell$ | The codeword generated from $\mathbf{w}_\ell$ |
| $F_{q\ell}$ | The finite field with size $q_\ell$, where $q_\ell$ should be a prime |
| $k_\ell$ | The length of $\mathbf{w}_\ell$ |
| $n$ | The length of resulted codeword |
| $\theta_\ell$ | The distinct prime for codeword $\ell$ (for UE $\ell$) |
| $R$ | The dimension-wise element of a lattice codeword. The details of constructing $R$ are shown in the description of embodiments section. |
| $m_\ell$ | The mapper to map the linear codeword from finite field to lattice partition $R/\theta_\ell R$ |
| $(C_\ell)^{-1}$ | The FEC decoder for UE $\ell$ |

The abstract system structure of the proposed LPMA with different decoding methods can be seen in Figs. 2, 3 and 4.

Each of these figures show the base station encoding and mapping the signals destined for the different UEs, multiplying them by respective weighting coefficients and then combining them and multiplying the combined signal by a normalisation factor which determines the power of the combined signal.

This combined signal is then transmitted and received by the multiple UEs.

In Figure 2 successive interference cancellation is performed. UE1 is the UE that receives the signal via the weakest channel and as such has the largest weighting coefficient. Initially UE1 performs channel compensation to compensate for losses occurring due to the channel which it determines based on received pilot signals, and then it extracts the signal destined for that UE from the combined signal based on a modulo lattice operation and decodes it.

UE2 has the next largest weighting coefficient and following channel compensation it will decode the signal with the largest weighting coefficient (destined for UE1) and will reconstruct the weighted lattice code signal from this decoded signal from which errors have been removed or at least reduced and it will then subtract this signal from the total signal, so that the combined signal is now the combined signals to UE2 to $UE_L$ and UE2 is the UE with the largest weighting coefficient. This signal is then extracted using a modulo lattice operation based on its weighting coefficient and it is decoded to generate the desired signal.

UE$_L$ which is the UE with the strongest channel will perform successive interference cancellation by extracting, decoding and reconstructing signals to all other UEs before extracting and decoding its own signal. Thus, for this UE the latency will be relatively high, although the complexity will be the same as for the other UEs.

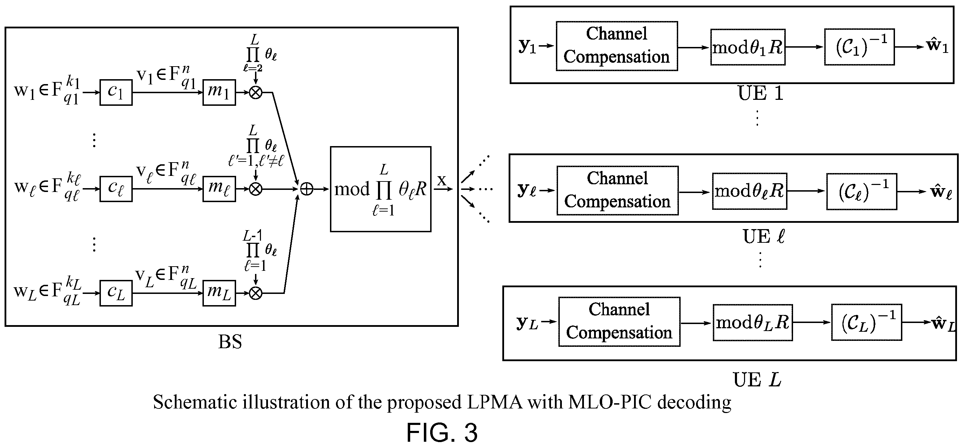

Figure 3 shows an alternative embodiment where each UE simply extracts its own signal by using the appropriate modulo lattice operation. This can be viewed as the operations all being performed in parallel. The latency for each UE is low, although the quality of the decoded signal particularly at the UEs with the stronger channels will be lower than is the case in the system of Figure 2.

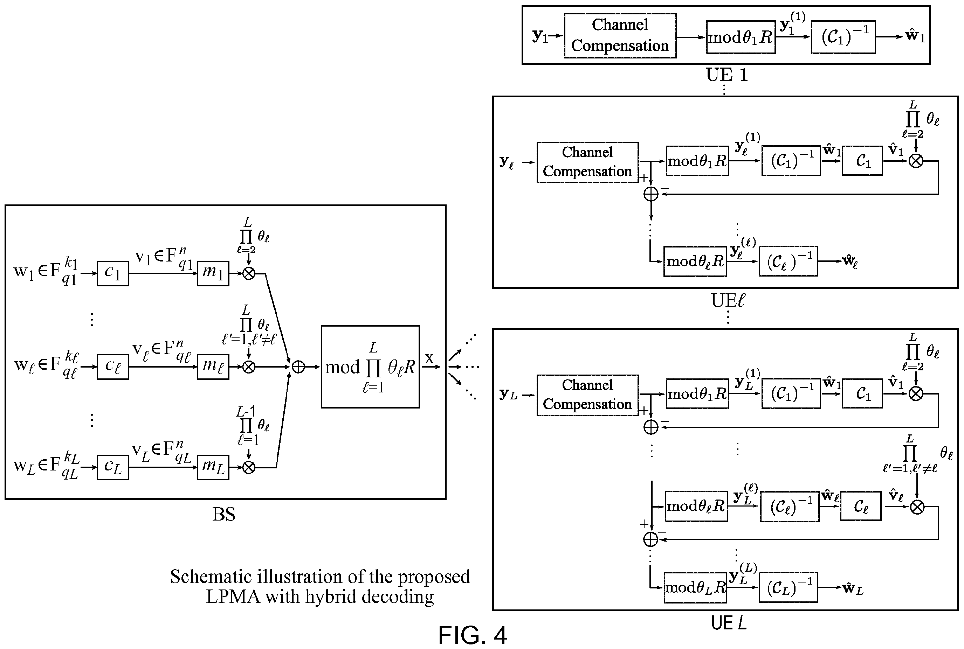

Figure 4 shows a hybrid system where UE1 and UE2 extract and decode the signal in the same way as they did in the system of Figure 2, however, other UEs with stronger channels, will extract the signals to UEs with weaker channels in parallel and sum the reconstructed signals and then subtract them from the total signal prior to extracting and decoding the signal destined for the UE. This provides a compromise solution with reduced latency compared to the SIC system of Figure 2 and improved quality for stronger channel UEs compared to the PIC system of Figure 3.

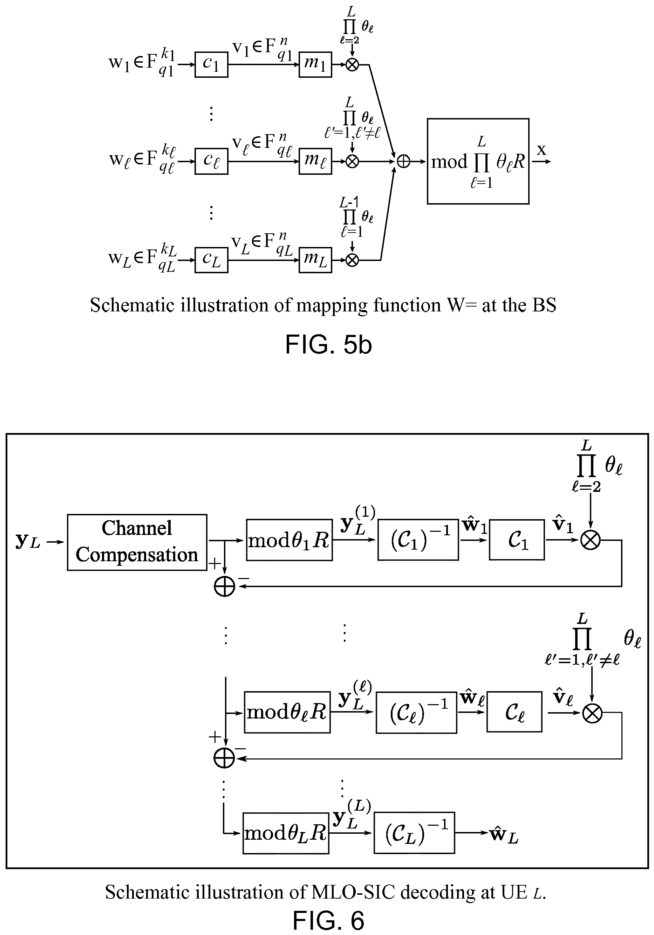

Figures 6 to 8, shows the UEs corresponding to the UEs shown in the system figures of Figures 2 to 4. Although each of these figures show particular arrangements of the extracting, decoding and reconstructing circuitry, it should be noted that each UE may contain a plurality of extracting, decoding and reconstructing circuitry with control circuitry arranged to interconnect the circuitry as required depending on the channel quality of the signal and also on the desired latency and/or quality for the signal output. Where the extracting, decoding and reconstructing is performed with software, the software that is executed will be controlled based on the channel quality of the signal and on the desired latency and/or quality required for the decoded signal.

Based on these figures, we can summarize the advantages of the proposed approach:

**Using lattice codes based superposition coding**

The proposed LPMA adopts a multi-dimensional lattice constellation, where the lattice's construction forms the superposition coding paradigm. The resulting superposition codeword for $L$ UEs is represented by the sum of weighted mapped codewords over the finite fields $F_{q_l}, \cdots, F_{q_\ell}, \cdots, F_{q_L}$, respectively. The weighted coefficients are constructed from some special algebraic structure, e.g., the integers, Gaussian or Eisenstein integers and the each linear code corresponds to a distinct prime which is determined by the size of finite field (either the distinct prime and the size of finite field are equal or the absolute value of square of this distinct prime equals to the size of finite field).. As such, by taking a simple modulo lattice operation, each linear code can be extracted and decoded to obtain the UE's desired signal. This facilitates the UE implementing SIC with modulo lattice operation as their decoding pattern and hence achieves a relatively low decoding complexity. On the other hand, the weighted coefficients for the weak users are larger than that for the strong users.

**Decoding using modulo operation and SIC/PIC/hybrid method**

Recall that each lattice layer (corresponding to each user) is associated with a distinct prime. After taking modulo lattice operation corresponding to that prime and lattice decoding (MLO-SIC), each UE's desired signal can be separated. Based on this, it implies that the MLO-SIC decoding paradigm for all UEs can be adopted to achieve the sum capacity of downlink transmission using SC. That is, after MLO-SIC (as seen in Fig. 2), the decoded UE's signal is used to reconstruct the weighted mapped signal, which will be subtracted from the received signal before decoding the rest UEs' signals. As such, decoding complexity does not increase with the number of UEs (the decoding complexity of the proposed LPMA is always the same with that over the point-to-point channel, regardless of the numbers of UEs.). For the case where the decoding latency is sensitive, we propose the modulo lattice operation with parallel interference cancellation (MLO-PIC) for multiplexing users, where in each decoding branch, the modulo lattice operation first cancels out the interference and the followed decoder extracts the desired signals (see Fig. 2). Moreover, a hybrid decoding (as seen in Fig. 4) where MLO-SIC and MLO-PIC are combined is also proposed for the users which seek both the error performance and decoding latency.

The following text explains in more detail the above-mentioned aspects of the proposed technique.

**Preliminaries: The concepts of lattice codes**

Let C denote the complex domain. Let $R \subset C$ be a principal ideal domain (PID) [1], which is a commutative ring such that: (1) whenever $ab = 0$ for $a, b \in R$, either $a = 0$ or $b = 0$ ; (2) $aR = \{ar : r \in R\}$ for some $a \in R$ can be used to represent the ideal in R, where ideal means a set of elements in $R$ that is closed under addition and multiplication by an arbitrary element in $R$. The most widely-used $Rs$ are: 1) the ring of integers Z ; 2) the ring of Gaussian integers Z[$i$], where Z [$i$] = $\{a + bj : a, b \in Z\}$; and 3) the ring of Eisenstein integers Z[$\omega$], where Z[$\omega$] = $\{a + b\omega : a, b \in Z\}$ and

$$\omega = \frac{-1+\sqrt{3}}{2}.$$

**Definition 1** (*R*-Lattice) [1]. Let $N \leq n$. A subset $\Lambda$, is a set of $C^n$ is called an $N$ - dimensional $R$-lattice if it forms a $R$-modulo of rank $N$, that is, $\Lambda$ is closed under addition and multiplication by scalars in the ring $R$, and there are $N$

$$\Lambda = \left\{ \sum_{j=1}^{N} r_j \mathbf{t}_j, r_j \in R, \forall j \right\}.$$

linearly independent vectors $t_1,...t_{N,} \in \Lambda$ such that   A lattice $\Lambda$ has the following prosperities: if $\mathbf{x}, \mathbf{y} \in \Lambda$, then $\mathbf{x} + \mathbf{y} \in \Lambda$ ; and if $\mathbf{x} \in \Lambda$, then $\mathbf{-x} \in \Lambda$. A subset $\Lambda'$ of $\Lambda$ is called a sub-lattice of $\Lambda$ if it is a $R$-modulo.
Given a $R$-Lattice $\Lambda$ and a sub-lattice $\Lambda'$ of $\Lambda$, the quotient group $\Lambda'/\Lambda = \{\lambda+\Lambda': \lambda \in \Lambda\}$ of $\Lambda$ naturally forms a partition of A .
**Definition 3** (Lattice Quantizer) [1]. For a $x \in C^n$, the nearest neighbor quantizer associate with A is denoted as

$$Q_\Lambda(\mathbf{x}) = \lambda \in \Lambda; \|\mathbf{x}-\lambda\| \leq \|\mathbf{x}-\lambda'\|, \forall \lambda' \in \Lambda,$$

where $\|\cdot\|$ represents the norm operation.
**Definition 4** (Modulo Operation) [1]. The mod $\Lambda$ operation returns the quantization error with respect to $\Lambda$ and is represented as

$$\mathbf{x} \bmod \Lambda = \mathbf{x} - Q_\Lambda(\mathbf{x}).$$

**The proposed LPMA**

Transmission of lattice SC codeword at BS side

Let $\theta_1,...,\theta_L$, be a collection of distinct primes from $R$, where $\theta_1,...,\theta_L$ are relatively prime. Naturally a quotient ring R/$\theta_\ell R$ with the order $|R/\theta_\ell R|=|\theta_\ell|^2=q_\ell$ exists, $\forall \ell \in \{1,...,L\}$ and $R/\theta_\ell R \cong F_{q_\ell}$ This indicates a Cartesian product based mapping relationship [1]:

$$\begin{aligned} R / \prod_{\ell=1}^{L}\theta_\ell R &\cong R / \bigcap_{\ell=1}^{L}\theta_\ell R \\ &\cong (R/\theta_1 R) \times ... \times (R/\theta_L R) \\ &\cong \mathbb{F}_{q_1} \times ... \times \mathbb{F}_{q_L} \end{aligned}$$

Based on the above equation, the following ring homomorphism exists

$$\pi: R \xrightarrow{\bmod \prod_{\ell=1}^{L}\theta_\ell R} R / \prod_{\ell=1}^{L}\theta_\ell R \underset{w^{-1}}{\overset{w}{\rightleftarrows}} \mathbb{F}_{q_1} \times ... \times \mathbb{F}_{q_L}$$

where w is a ring isomorphism which is used as the superposition mapping function in the proposed approach, given by

$$\mathcal{W}(m_1,...,m_L) \triangleq \sum_{\ell=1}^{L} m_\ell \prod_{\ell'=1,\ell'\neq\ell}^{L}\theta_{\ell'} \bmod \prod_{\ell=1}^{L}\theta_\ell R,$$

where $m_\ell \in F_{q_\ell}$ can be treated as a mapping function which maps the linear codewords over finite fields to the isomorphic lattice partitions. As such the linear codeword $\mathbf{V}_\ell$ generated from a $(n,k_\ell)$ linear code $C_\ell$ over the finite field $F_{q_\ell}$ can be

mapped into a lattice codeword in an element-wise manner. The lattice based on this construction can be represented as

$$\Lambda = \prod_{\ell=1}^{L} \theta_\ell R^n + W(C_1, ..., C_L).$$

The above superposition mapping function is the designed principle of generating lattice codes based SC. We can observe that, the weighted coefficients for the weak users are larger than that for the strong users. This paradigm has the same function as the power allocation in the conventional superposition coding for multiple users.

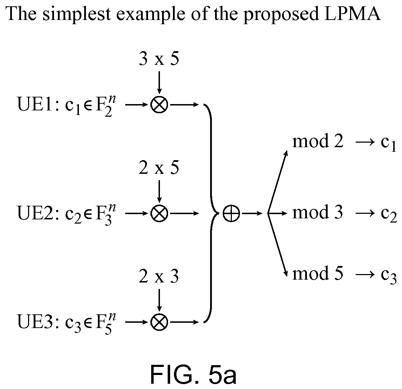

Figure 5a shows a simple example of a mapping function for generating a superposition lattice code for transmitting signals to three UEs. For each of the three user equipment a codeword is formed over a finite field of an order or size that is a relative prime compared to the finite field of the other two. Thus, in this case, the size of the finite field is 2, 3 and 5. The size of the finite field also determines the weighting coefficient that the codeword is multiplied by.

As each code layer corresponds to a distinct prime which is determined by the size of finite field of the codeword (either the distinct prime and the size of finite field are equal or the absolute value of square of this distinct prime equals to the size of finite field)., this can be used to generate the weighting coefficient which is formed as a product of the distinct primes excluding the prime of that code layer. In this way the size of the finite fields of the encoders provides you with the lattice partition operation used to generate weighting coefficients. The size of the finite field also provides the modulo lattice operation required to extract the signal. Thus, as there are in this example three UEs with finite fields of order, 2, 3 and 5, for UE1 which has a finite field of order 2, the coefficient is 3 X 5, in other words the order of the other UEs' finite fields and to extract the codeword for UE2 from the combined signal a modulo 2 operation needs to be performed.

The following Fig. 5b shows a generalised example of the detail of the superposition mapping function W=, where the resultant lattice SC is denoted as **X** for L UEs.

Reception of lattice SC codeword at UE side

Suppose BS serves $L$ UEs such that the superimposed signal at the UE $\ell$ can be virtually presented as

$$\mathbf{y}_\ell^T = h_\ell \mathbf{x}^T + \mathbf{z}_\ell^T,$$

where $\mathbf{x} \in \Lambda$ is the transmitted lattice SC codeword from BS with dimension $n$ and power $P$; $h_\ell$ is the channel coefficient from BS to UE $\ell$; and $z_\ell \sim CN(0, \sigma^2 \mathbf{I}^n)$ is the noise.

After the channel compensation, the received signal is equivalent to

$$\tilde{\mathbf{y}}_\ell^T = \mathbf{y}_\ell^T / h_\ell = \mathbf{x}^T + \mathbf{z}_{\ell, \text{eqv}}^T,$$

where $\mathbf{z}_{\ell,\text{eqv}}^T \triangleq \mathbf{z}_\ell^T / h_\ell$ is the equivalent noise with the variance $\sigma_{\text{eqv},\ell}^2 = \sigma^2 / |h_\ell|^2$. The proposed SIC can exploit the layered structure of the constructed lattice $\Lambda$ and extract UEs' desired signals from $\tilde{\mathbf{y}}_\ell^T$.

A) MLO-SIC

*Here we assume that the order of channel conditions is: UE1<UE 2<...<UE$_L$* and hence based on the SIC decoding principle, the last user, UE$_L$ will take the full SIC decoding for extracting the desired signals from UE$_1$ to itself. In the following, we will explain the principle of MLO-SIC for the proposed LPMA.

One can observe that $\theta_1$ appears in the coefficient of every term except from the first term. All the $\theta_\ell$ s are relatively prime. Hence, when decoding the codeword of UE1 one can first cancel out the contribution from all the other UEs' codewords by simply forming

$$\tilde{\mathbf{y}}_L^{(1)} = \tilde{\mathbf{y}}_L \bmod \theta_1 R$$

The decoder then decodes $\hat{\mathbf{w}}_1$ from $\tilde{\mathbf{y}}_L^{(1)}$ and reencodes it to $\hat{\mathbf{v}}_1$. For the layers $\ell \in \{2,..,L - 1\}$, the decoder subtracts all the interference from the previous layers and cancels out all the signals from the next layers via forming

$$\tilde{\mathbf{y}}_L^{(\ell)} = \left( \tilde{\mathbf{y}}_L - \sum_{s=1}^{\ell-1} \hat{\mathbf{v}}_s \prod_{s'=1,s'\neq s}^{L} \theta_{s'} \right) \bmod \theta_\ell R .$$

The decoder then decodes $\hat{\mathbf{w}}_\ell$ from $\tilde{\mathbf{y}}_L^{(\ell)}$ and reencode it to $\hat{\mathbf{v}}_\ell$. This makes the channel experienced by the $\ell$-th coded stream a single layer additive mod $\theta_\ell R$ channel. In the last stage of decoding, $\hat{\mathbf{w}}_L$ can be directly decoded from

$$\tilde{\mathbf{y}}_L^{(L)} = \left( \tilde{\mathbf{y}}_L - \sum_{s=1}^{L-1} \hat{\mathbf{v}}_s \prod_{s'=1,s'\neq s}^{L} \theta_{s'} \right) \bmod \theta_\ell R .$$

We summarize the procedure of the SIC decoder with modulo operation in Fig. 6.

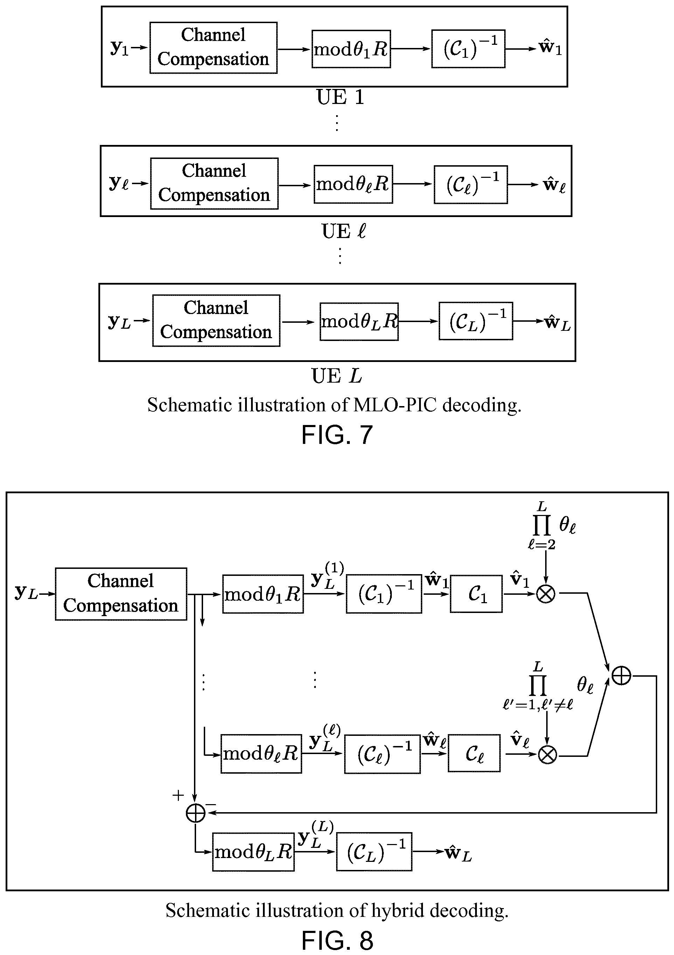

In some scenarios, the decoding latency is a sensitive issue. To eliminate the decoding latency, the modulo lattice operation with parallel interference cancellation (MLO-PIC) is proposed for LPMA (as seen in Fig. 7). As all the $\theta_\ell$ s are relatively prime. Hence, UE $\ell$ can directly cancel out the interference from all the other UEs' codewords by using modulo lattice operation, i.e., $\mathbf{y}_\ell \bmod \theta_\ell R$ such that the decoder then decodes $\hat{\mathbf{w}}_\ell$ from it.

Moreover, a hybrid decoding (as seen in Fig. 8) where MLO-SIC and MLO-PIC are combined is also proposed for the users seek for both the error performance and decoding latency. In this decoding approach, the UE $\ell$ adopts MLO-PIC to first cancel out the contribution from all the other UEs' codewords by simply forming

$$\tilde{\mathbf{y}}_L^{(1)} = \tilde{\mathbf{y}}_L \bmod \theta_1 R$$
$$\vdots$$
$$\tilde{\mathbf{y}}_L^{(L-1)} = \tilde{\mathbf{y}}_L \bmod \theta_\ell R .$$

The decoder then decodes all other UEs's messages $\hat{\mathbf{w}}_1...\hat{\mathbf{w}}_{L-1}$ from $\tilde{\mathbf{y}}_L^{(1)} ... \tilde{\mathbf{y}}_L^{(L-1)}$ and reencode it to $\hat{\mathbf{v}}_1 ... \hat{\mathbf{v}}_{L-1}$.

In the last stage of decoding, $\hat{\mathbf{w}}_L$ can be directly decoded from

$$\tilde{\mathbf{y}}_L^{(L)} = \left( \tilde{\mathbf{y}}_L - \sum_{s=1}^{L-1} \hat{\mathbf{v}}_s \prod_{s'=1,s'\neq s}^{L} \theta_{s'} \right) \bmod \theta_\ell R .$$

And it is worth noting that in this hybrid decoding method, PIC-decoded layers and SIC-decoded layers can be flexibly adjusted such that the balance between decoding latency and error performance can be achieved.

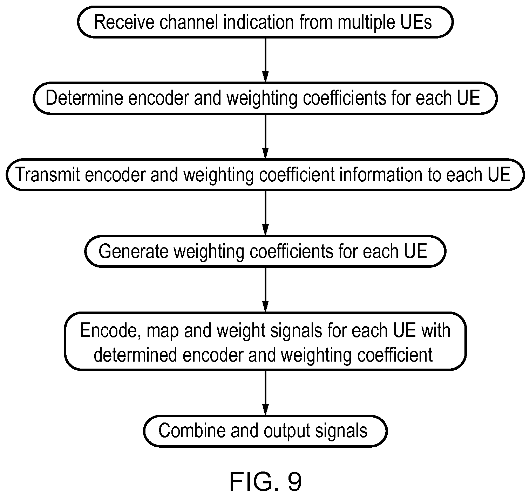

Figure 9 shows a flow diagram illustrating steps performed in a method at a base station according to an embodiment. The base station receives channel indications from the multiple user equipment that are within its cell. From these channel indications, it determines the state of the channel to each UE and ranks them according to this, such that the UE with the poorest channel will be ranked first and the UE with the strongest channel will be ranked last. It will then determine finite field sizes and weighting coefficients that are required for each user equipment in dependence upon the strength of the channel. In this regard, in order to compensate for the poorer channels, it will use higher value coefficients to weight the signal. Furthermore, the encoders used which are linear finite field encoders, will be different for each signal and the order or size of the finite field will again be selected depending on the channel strength with the weakest channel strength having the lowest order finite field.

Once this has been determined then this information is transmitted to the user equipment. The information may be transmitted in a number of forms but in some embodiments, the information is transmitted as an index. The index in effect identifying where the user equipment is ranked and allows the user equipment to determine which Galois field the encoder is encoded with and which modular operation is required to extract the signal to that user equipment and where successive interference cancellation is used, how many extracting, decoding and reconstructing iterations are required prior to receiving the signal.

The multiple signals to the multiple users are then encoded by linear finite field encoders and the resulting codewords are mapped to lattice codes and then the appropriate weighting coefficients are generated and the mapped signals multiplied by them. These encoded and weighted signals are combined to form a superimposed lattice code signal which is output from the base station.

As user equipment move within the cells and as more user equipment join and leave cells, the encoder and coefficients for each user equipment are updated as the channel states vary and this information is transmitted to the user equipment and the encoding and weighting coefficients are changed as required.

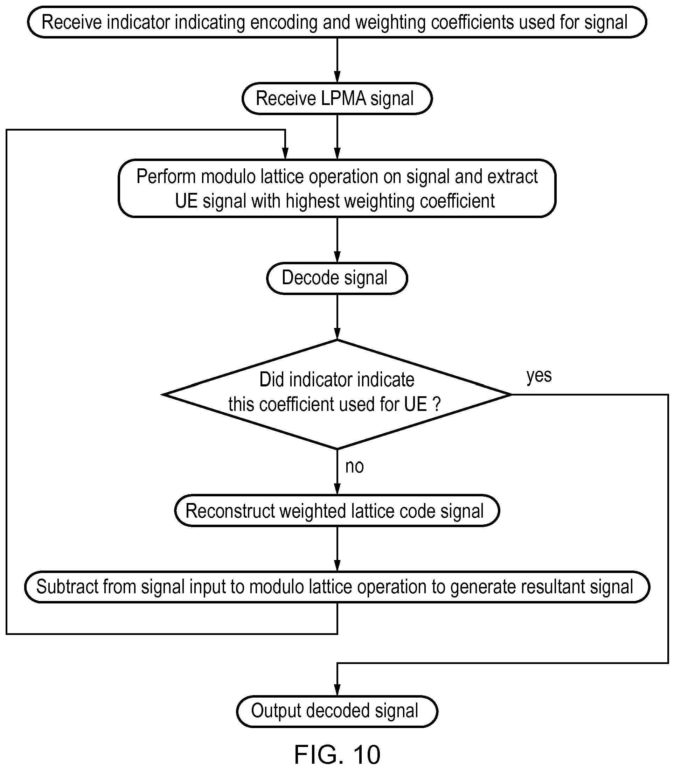

Figure 10 shows a flow diagram illustrating a method performed at a user equipment according to an embodiment. The user equipment transmits certain signals periodically from which the base station can determine the channel state of that user equipment. The base station will transmit an indicator indicating the encoding and coefficients that are to be used to encode and weight the signal transmitted to that user equipment and the user equipment will use this information to configure itself such that it can decode and extract a superimposed signal that is transmitted to it from the base station.

The user equipment then receives the superimposed signal from which it needs to extract the downlink information that is destined for itself. From the information it received regarding the encoding and coefficients that are used for the signal directed to itself, it will determine which modulo lattice operation is required to extract its own signal and what decoder to use. In this embodiment the user equipment is configured to perform successive interference cancellation on the signal it receives and thus, it extracts and decodes each signal within the combined starting with the signal with the highest weighting coefficient, where that is not the signal destined for the user equipment it reconstructs the encoded signal with errors removed and then deletes the reconstructed signal from the received signal and performs the process again until it extracts and decodes its own signal.

Thus, it performs the modulo lattice operation relevant for the user equipment with the poorest channel and extracts the signal with the highest coefficient. It can then decode this signal and determine whether this is the signal for this user equipment from the indicator received. If it is not, then it reconstructs a mapped lattice code signal for that decoded signal and subtracts it from the input signal and performs the modulo lattice operation for the user equipment with the next poorest channel and thereby extracts the signal with the current highest coefficient. It can then repeat this process until it extracts the signal destined for its own user equipment. Thus, the signal can then be decoded using the decoder relevant for the finite field encoder used to encode that signal.

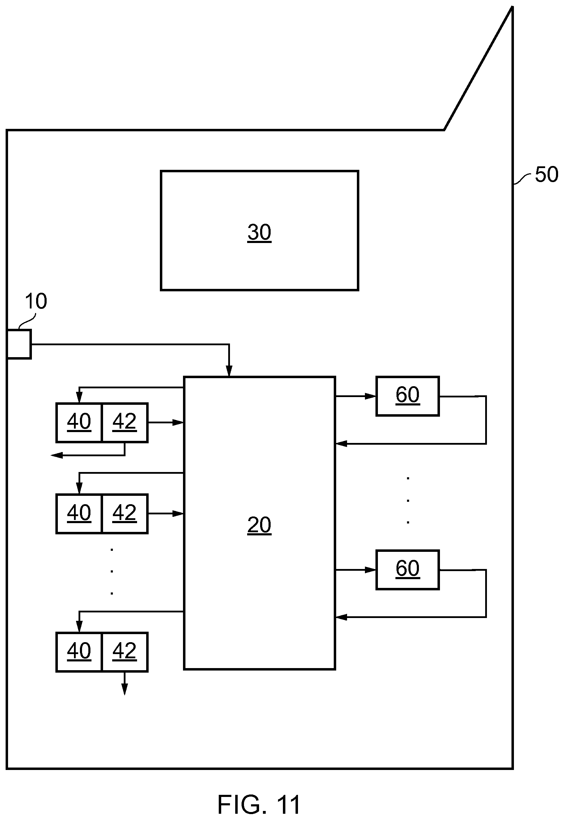

Figure 11 schematically shows a user equipment 50 according to an embodiment.

The user equipment comprises a plurality of signal extractors 40 and decoders 42, and a plurality of encoded signal reconstructors 60. User equipment 50 also comprises control circuitry 30 and routing and interconnecting circuitry 20 which allow the user equipment to assume different decoding configurations depending on requirements.

In operation user equipment 10 receives an indicator from the base station which comprises an index indicating a weighting coefficient and finite field of the signal destined for that user equipment. This signal is routed to control circuitry 30.

User equipment 50 then receives a superposition lattice coded signal at receiver 10 and this is sent to routing and interconnecting circuitry 20, which is controlled by control circuitry 30. Control circuitry 30 determines from the index the modulo lattice operation required to extract the signal destined for that user equipment from the superposition lattice coded signal. Control circuitry 30 also determines the latency and/or quality requirements of the decoded signal.

From these determinations a control signal is transmitted to control the routing and interconnecting circuitry 20 to provide a set up as shown in any one of Figures 6 to 8. Thus, the routing and interconnecting circuitry 20 routes the received signal to the relevant signal extractor(s) 40 which performs a modulo lattice operation on the signal and then routes the extracted signal to decoder(s) 42 which decodes the signal, the signal is then either output to output circuitry (not shown) on the user equipment 50 if it is a signal destined for that user equipment, or it is routed to a signal reconstructor 60 which encodes, maps and weights the signal whereupon it is transmitted back to the routing and interconnecting circuitry where it is either subtracted from the original signal and routed to a further extractor and decoder or combined with other reconstructed signals and then subtracted from the original signal and routed to further extractor and decoder circuitry. In this way the control circuitry 30 and the routing and interconnecting circuitry 20 provide different configurations for the user equipment allowing for successive, parallel or hybrid interference cancellation.

In summary embodiments proposes a downlink mulitple access for 5G RAN, which is robust to mobility, channel aging and enjoys low overhead of CSI acquisition. A lattice code based superposition coding is chosen as the basis for the new multiple access design, i.e., data encoding and medium access, which is then transmitted by using multiple physical resources (e.g., multi-dimensional lattice codeword can be transmitted over symbol periods, OFDM subcarriers or antennas). The BS encodes the desired signal of each UE into different lattice code layers which correpond to distinct primes such that each UE can extract their desired signal by performing a modulo lattice operation and successive interference cancellation (MLO-SIC)/parrellel inteference cancellation (PIC)/hybrid decoding, which exhibits a linear decoding complexity. The proposed LPMA exploits the interference by utilizing the structural property of lattice codes and improves the performance over the conventional NOMA.

Looking at Fig. 1, we can observe that:

---Compared with the existing NOMA proposed by NTT DoCoMo, the proposed LPMA enhances the user throughput from 70Mbps to 90Mbps.
---Compared with the OMA (OFMDA) in 4G system, our proposed LPMA enhances the user throughput from 55Mbps to 90Mbps.

The proposed technique represents a significant improvement compared to the current NOMA proposed by NTT DoCoMo and OMA (OFDMA).

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method performed at a network node comprising:

    receiving an indication of channel conditions from each of a plurality of user equipment;
    encoding a plurality of signals destined for a plurality of user equipment using a plurality of finite field linear encoders to form a plurality of lattice code signals;
    weighting each of said plurality of lattice codes by multiplying said lattice code signals by respective weighting coefficients, each weighting coefficient being formed from a product of distinct primes, each weighting coefficient being formed by excluding a different one of said distinct primes from said product, said weighting coefficients being selected in dependence upon said detected channel conditions, signals to be transmitted to said user equipment with poorer channel conditions being multiplied by higher value weighting coefficients; and combining said plurality of weighted lattice code signals to form a signal having a lattice code construction and outputting said signal.

2. A method according to claim 1, wherein said encoding step comprises encoding said plurality of signals to form linear encoded signals and mapping said plurality of linear encoded signal to form said plurality of lattice code signals.

3. A method performed at a network node according to any preceding claim, wherein each of said plurality of encoders comprises a channel encoder over a finite field, each encoder generating linear codewords over the different finite fields, a size of said finite fields and said weighting coefficients being linked, such that signals encoded by channel encoders over smaller finite fields are subsequently multiplied by higher value coefficients.

4. A method according to any preceding claim, further comprising transmitting to each of said user equipment an indication identifying an order of a finite field of said encoder and said coefficient applied to said signal for said user equipment.

5. A network node comprising:

a plurality of finite field linear encoders arranged in parallel, for encoding a plurality of signals destined for a plurality of user equipment to form lattice code signals;
a coefficient generator for generating a plurality of weighting coefficients for each lattice code, each weighting coefficient formed as a product of a plurality of distinct primes, each weighting coefficient excluding a different one of said distinct primes from said product;
a receiver for receiving an indication of channel conditions from each of said plurality of user;
a plurality of multipliers for weighting each of said plurality of lattice code signals by multiplying said lattice code signals by respective ones of said generated weighting coefficients; a controller for selecting said weighting coefficients in dependence upon said detected channel conditions, encoded signals to be transmitted to said user equipment with poorer channel conditions being multiplied by higher value coefficients;
a combiner for combining said plurality of weighted lattice code signals to form a signal having a lattice code construction; and
a transmitter for transmitting said signal.

6. A network node according to claim 5, wherein said plurality of finite field linear includes a plurality of signal mappers for mapping the encoded signal to form a plurality of lattice codes

7. A network node according to claim 5 or 6, wherein each of said plurality of encoders comprise a channel encoder over finite fields, each encoder being configured to generate linear codes over different finite fields with different sizes, said coefficient generator being configured to transmit higher value weighting coefficients to multipliers multiplying lattice code signals stemming from finite field encoders encoding over smaller finite fields.

8. A network node according to claim 5, 6 or 7, wherein the network node further comprises a transmitter for transmitting to each of said user equipment an indication identifying a finite field of said encoder and said weighting coefficient applied to said signal for said user equipment.

9. A computer program which when executed by a computer is operable to control said computer to perform a method according to any one of claims 1 to 4.

**Patentansprüche**

1. Verfahren, das an einem Netzwerkknoten durchgeführt wird, umfassend:

Empfangen einer Anzeige von Kanalbedingungen von jedem einer Vielzahl von Benutzergeräten;
Codieren einer Vielzahl von Signalen, die bestimmt sind für eine Vielzahl von Benutzergeräten, die eine Vielzahl von linearen endlichen Feld-Codierern verwenden, um eine Vielzahl von Gitter-Codiersignalen zu bilden;

Wichten jedes besagter Vielzahl von Gitter-Codes durch Multiplizieren besagter Gitter-Code-Signale mit entsprechenden Wichtungskoeffizienten, wobei jeder WichtungsKoeffizient gebildet wird aus einem Produkt unterschiedlicher Primzahlen, wobei jeder Wichtungskoeffizient gebildet wird durch Ausschließen einer verschiedenen besagter unterschiedlicher Primzahlen aus besagtem Produkt, wobei besagte Wichtungskoeffizienten ausgewählt werden in Abhängigkeit besagter erkannten Kanalbedingungen, wobei die Signale, die auf besagtes Benutzergerät übertragen werden sollen und schlechtere Kanalbedingungen aufweisen, multipliziert werden mit Wichtungskoeffizienten höherer Werte; und

Kombinieren besagter Vielzahl gewichteter Gitter-Code-Signale zum Bilden eines Signals mit einer Gitter-Code-Konstruktion und Ausgeben besagten Signals.

2. Verfahren nach Anspruch 1, wobei besagter Codierschritt umfasst das Codieren besagter Vielzahl von Signalen zum Bilden linear codierter Signale und zum Abbilden besagter Vielzahl von linear codierten Signalen zum Bilden besagter Vielzahl von Gitter-Code-Signalen.

3. Verfahren, durchgeführt an einem Netzwerkknoten nach einem beliebigen der vorhergehenden Ansprüche, wobei jeder besagter Vielzahl von Codierern umfasst einen Kanal-Codierer über ein finites Feld, wobei jeder Codierer lineare Codewörter über die verschiedenen finiten Felder erzeugt, wobei eine Größe besagter finiten Felder und besagter Wichtungskoeffizienten so verbunden sind, dass die Signale, die durch Kanal-Codierer über kleineren finiten Feldern codiert sind, nachfolgend multipliziert werden mit Koeffizienten höherer Werte.

4. Verfahren nach einem beliebigen der vorhergehenden Ansprüche, weiterhin umfassend das Übertragen auf jedes besagter Benutzergeräte einer Anzeige, die eine Ordnung eines finiten Feldes besagter Codierer identifiziert und besagten Koeffizienten, der angewendet wird auf besagtes Signal für besagtes Benutzergerät.

5. Netzwerkknoten, umfassend:

eine Vielzahl von linearen finiten Feld-Codierern, die parallel angeordnet sind, zum Codieren einer Vielzahl von Signalen, die bestimmt sind für eine Vielzahl von Benutzergeräten zum Bilden von Gitter-Code-Signalen;

einen Koeffizienten-Generator zum Erzeugen einer Vielzahl von Wichtungsfaktoren für jeden Gitter-Code, wobei jeder Wichtungsfaktor gebildet wird als ein Produkt einer Vielzahl unterschiedlicher Primzahlen, wobei jeder Wichtungskoeffizient eine verschiedene besagter unterschiedlichen Primzahlen aus besagtem Produkt ausschließt;

einen Empfänger zum Empfangen einer Anzeige von Kanalbedingungen von jedem besagter Vielzahl von Benutzern;

eine Vielzahl von Multiplizierern zum Wichten jedes besagter Vielzahl von Gitter-Code-Signalen durch Multiplizieren besagter Gitter-Code-Signale mit entsprechenden besagter erzeugter Wichtungskoeffizienten; einen Controller zum Auswählen besagter Wichtungskoeffizienten in Abhängigkeit besagter erkannten Kanalbedingungen, wobei die codierten Signale, welche auf besagtes Benutzergerät übertragen werden sollen und schlechtere Kanalbedingungen aufweisen, mit Koeffizienten höherer Werte multipliziert werden;

einen Kombinator zum Kombinieren besagter Vielzahl gewichteter Gitter-Code-Signale zum Bilden eines Signals, welches eine Gitter-Code-Konstruktion aufweist; und

einen Sender zum Übertragen besagten Signals.

6. Netzwerkknoten nach Anspruch 5, wobei besagte Vielzahl linearer finiter Felder einschließt eine Vielzahl von Signal-Mappern zum Abbilden des codierten Signals zum Bilden einer Vielzahl von Gitter-Codes.

7. Netzwerkknoten nach Anspruch 5 oder 6, wobei jeder besagter Vielzahl von Codierern umfasst einen Kanal-Codierer über finite Felder, wobei jeder Codierer konfiguriert ist zum Erzeugen linearer Codes über verschiedene finite Felder mit unterschiedlichen Größen, wobei besagter Koeffizienten-Generator konfiguriert ist zum Übertragen von Wichtungskoeffizienten höheren Wertes auf Multiplizierer, die Gitter-Code-Signale multiplizieren, die von finiten Feld-Codierern stammen, welche über kleineren finiten Feldern codieren.

8. Netzwerkknoten nach Anspruch 5, 6 oder 7, wobei der Netzwerkknoten weiterhin umfasst einen Sender zum Übertragen auf jedes besagter Benutzergeräte einer Anzeige, die ein finites Feld von besagtem Codierer identifiziert und besagten Wichtungskoeffizienten, der angewendet wird auf besagtes Signal für besagtes Benutzergerät.

9. Computerprogramm, welches, wenn es von einem Computer ausgeführt wird, betreibbar ist zum Steuern besagten Computers zum Durchführen eines Verfahrens, das einem beliebigen der Ansprüche 1 bis 4 entspricht.

**Revendications**

1. Procédé exécuté au niveau d'un noeud de réseau comprenant les étapes suivantes :

    recevoir une indication de conditions de canal à partir de chaque équipement utilisateur parmi une pluralité d'équipements utilisateur ;
    coder une pluralité de signaux destinés à une pluralité d'équipements utilisateur en utilisant une pluralité de codeurs linéaires de champ fini pour former une pluralité de signaux de codes en treillis ;
    pondérer chaque code en treillis parmi ladite pluralité de codes en treillis en multipliant lesdits signaux de codes en treillis par des coefficients de pondération respectifs, chaque coefficient de pondération étant formé à partir d'un produit de nombres premiers distincts, chaque coefficient de pondération étant formé en excluant dudit produit un nombre premier différent parmi lesdits nombres premiers distincts, lesdits coefficients de pondération étant choisis en fonction desdites conditions de canal détectées, des signaux devant être transmis audit équipement utilisateur avec des conditions de canal plus faibles étant multipliés par des coefficients de pondération de valeur supérieure ; et
    combiner ladite pluralité de signaux de codes en treillis pondérés pour former un signal ayant une construction de codes en treillis et délivrer en sortie ledit signal.

2. Procédé selon la revendication 1, dans lequel ladite étape de codage comprend le codage de ladite pluralité de signaux pour former des signaux codés linéaires et le mappage de ladite pluralité de signaux codés linéaires pour former ladite pluralité de signaux de codes en treillis.

3. Procédé exécuté au niveau d'un noeud de réseau selon l'une quelconque des revendications précédentes, dans lequel chaque codeur parmi ladite pluralité de codeurs comprend un codeur de canal sur un champ fini, chaque codeur générant des mots codés linéaires sur les différents champs finis, une taille desdits champs finis et lesdits coefficients de pondération étant liés, de sorte que des signaux codés par des codeurs de canal sur des champs finis plus petits soient par la suite multipliés par des coefficients de valeur supérieure.

4. Procédé selon l'une quelconque des revendications précédentes, comprenant en outre la transmission à chacun desdits équipements utilisateur d'une indication identifiant un ordre d'un champ fini dudit codeur et dudit coefficient appliqués audit signal pour ledit équipement utilisateur.

5. Noeud de réseau comprenant :

    une pluralité de codeurs linéaires de champ fini disposés en parallèle, pour coder une pluralité de signaux destinés à une pluralité d'équipements utilisateur pour former des signaux de codes en treillis ;
    un générateur de coefficients pour générer une pluralité de coefficients de pondération pour chaque code en treillis, chaque coefficient de pondération étant formé comme un produit d'une pluralité de nombres premiers distincts, chaque coefficient de pondération excluant dudit produit un nombre premier différent parmi lesdits nombres premiers distincts ;
    un récepteur pour recevoir une indication de conditions de canal à partir de chaque utilisateur parmi ladite pluralité d'utilisateurs ;
    une pluralité de multiplicateurs pour pondérer chaque signal de code en treillis parmi la pluralité de signaux de codes en treillis en multipliant lesdits signaux de codes en treillis par des coefficients de pondération respectifs parmi lesdits coefficients de pondération générés ; un contrôleur pour choisir lesdits coefficients de pondération en fonction desdites conditions de canal détectées, des signaux codés devant être transmis audit équipement utilisateur avec des conditions de canal plus faibles étant multipliés par des coefficients de valeur supérieure ;
    un combineur pour combiner ladite pluralité de signaux de codes en treillis pondérés pour former un signal ayant une construction de codes en treillis ; et
    un émetteur pour transmettre ledit signal.

6. Noeud de réseau selon la revendication 5, dans lequel ladite pluralité de codeurs linéaires de champ fini comprend une pluralité de dispositif de mappage de signal pour mapper le signal codé pour former une pluralité de codes en treillis.

7. Noeud de réseau selon la revendication 5 ou 6, dans lequel chaque codeur parmi ladite pluralité de codeurs comprend un codeur de canal sur des champs finis, chaque codeur étant configuré pour générer des codes linéaires sur différents champs finis avec des tailles différentes, ledit générateur de coefficients étant configuré pour transmettre des coefficients de pondération de valeur supérieure à des multiplicateurs multipliant des signaux de codes en treillis provenant de codeurs de champ fini codant sur des champs finis plus petits.

8. Noeud de réseau selon la revendication 5, 6 ou 7, le noeud de réseau comprenant en outre un émetteur pour transmettre à chacun desdits équipements utilisateur une indication identifiant un champ fini dudit codeur et dudit coefficient de pondération appliqués audit signal pour ledit équipement utilisateur.

9. Programme informatique qui, lorsqu'il est exécuté par un ordinateur, permet de contrôler ledit ordinateur pour exécuter un procédé selon l'une quelconque des revendications 1 à 4.

FIG. 1

FIG. 2

Schematic illustration of the proposed LPMA with MLO-SIC decoding

Schematic illustration of the proposed LPMA with MLO-PIC decoding

## FIG. 3

EP 3 206 319 B1

FIG. 4

Schematic illustration of the proposed LPMA with hybrid decoding

The simplest example of the proposed LPMA

FIG. 5a

Schematic illustration of mapping function W= at the BS

## FIG. 5b

Schematic illustration of MLO-SIC decoding at UE $L$.

## FIG. 6

Schematic illustration of MLO-PIC decoding.

FIG. 7

Schematic illustration of hybrid decoding.

FIG. 8

Receive channel indication from multiple UEs

Determine encoder and weighting coefficients for each UE

Transmit encoder and weighting coefficient information to each UE

Generate weighting coefficients for each UE

Encode, map and weight signals for each UE with determined encoder and weighting coefficient

Combine and output signals

FIG. 9

Receive indicator indicating encoding and weighting coefficients used for signal

Receive LPMA signal

Perform modulo lattice operation on signal and extract UE signal with highest weighting coefficient

Decode signal

Did indicator indicate this coefficient used for UE ?

yes

no

Reconstruct weighted lattice code signal

Subtract from signal input to modulo lattice operation to generate resultant signal

Output decoded signal

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NATARAJAN LAKSHMI et al.** Lattice Index Coding. *IEEE Transaction on Information theory,* December 2015, vol. 61 (12

- **YU-CHIH HUANG et al.** *Multistage Compute-and-Forward with Multilevel Lattice Codes Based on Product Constructions*